# EUROPÄISCHE PATENTANMELDUNG

(11) **EP 1 614 558 A2**
(43) Veröffentlichungstag der Anmeldung: **11.01.2006**
(21) Anmeldenummer: 05012529.3
(22) Anmeldetag: 10.06.2005
(51) Int. Cl.: B60H 1/00

(54) **Aufdach-Klimaanlage**

(30) Priorität: 09.07.2004 DE 102004033352
(71) Anmelder: AURORA Konrad G. Schulz GmbH & Co. KG, 69427 Mudau (DE)
(72) Erfinder: Müller, Martin, 74936 Siegelsbach (DE); Schaarschmidt, Jens, 74834 Elztal (DE)
(74) Vertreter: Baronetzky, Klaus

(57) **Zusammenfassung**

Die Erfindung betriff eine Aufdach-Klimaanlage (10), mit einem Verflüssigerraum (24), der mindestens einen Verflüssiger (26) und mindestens ein Verflüssigergebläse (28) aufnimmt, und mit einem Verdampferraum (36), der mindestens einen Verdampfer (38) und mindestens einen Verdampfergebläse (34) aufnimmt, wobei ein Gehäuse (12) für deren Aufnahme auf dem Dach (16) eines Fahrzeuges befestigbar ist. Das Gehäuse (12) weist eine Unterschale (18) auf, die das oder die Verdampfergebläse (32) trägt. Die Unterschale (18) bildet eine Trennwand (30) zwischen Verdampferraum (36) und Verflüssigerraum (24).

## Beschreibung

Die Erfindung betrifft eine Aufdach-Klimaanlage, gemäß dem Oberbegriff von Anspruch 1.

Aufdach-Klimaanlagen sind seit langem bekannt. Sie lassen sich häufig recht einfach gerade auf Omnibussen montieren und haben den Vorteil, dass für die Luftführung und die Bereitstellung der einzelnen Einheiten einer Klimaanlage nicht die Reservierung von Innenraum in dem Omnibus erforderlich ist. Ferner sind die Luftzuführkanäle für die Klimaanlage in strömungstechnischer günstiger Gestaltung unterzubringen, und die Luftansaugung kann recht weit entfernt von dem Auspuff des Omnibusses erfolgen.

Bei derartigen Klimaanlagen kommt es jedoch darauf an, eine möglichst flachbauende Ausgestaltung zu erzielen. Hierzu sind verschiedene Maßnahmen bekannt geworden. Beispielsweise sind bei der Lösung gemäß der DE-OS 32 24 895 die einzelnen Einheiten so aufgeteilt, dass sich eine vergleichsweise niedrige Bauhöhe ergibt. Der Verflüssiger ist zudem nahezu liegend angeordnet.

Eine günstige Ausgestaltung einer derartigen Aufdach-Klimaanlage ist auch aus der DE-A1 197 14 731 bekannt. Diese Lösung bietet besondere montagetechnische aber auch strömungstechnische Vorteile, insbesondere beim Transport der Anlage.

Jedoch sind vergleichsweise lange Dichtlängen durch die gemäß der genannten Druckschrift vorgesehenen Spalte erforderlich. Aus der DE-OS 27 57 415 ist eine kompakte Aufdach-Klimaanlage bekannt, bei der die für die Klimaanlage erforderlichen Einheiten, also Verflüssiger, Verflüssigergebläse, Verdampfer und Verdampfergebläse in einem gemeinsamen Gehäuse integriert sind.

Bei dieser Lösung sind als Verdampfergebläse zwei Einzel-Radialgebläse außenseitig der Aufdach-Klimaanlage, also je ihrem rechten und ihrem linken Rand benachbart, angeordnet. Die Radialgebläse sind je an einer schrägstehenden Wand angeflanscht, und es ist ein spezieller Auslasskanal in besonderer Weise aufgebaut, so dass die aus dem Radialgebläse ausströmende Luft mit recht großer Wurfweite schräg nach unten ausströmt.

Die Lösung hat den Nachteil, dass ein recht hoher Geräuschpegel aufgrund der hohen Strömungsgeschwindigkeit erzeugt wird, wenn nicht durch besondere Maßnahmen eine Schalldämmung wird. Derartige bauseits vorzunehmende Maßnahmen sind jedoch nicht nur teuer, sondern von den Omnibusherstellern unerwünscht.

Demgegenüber ist im Grunde der Ausblasskanal gemäß der DE 197 14 731 günstiger, denn er ist recht lang. Es ist jedoch eine besondere Strömungsleitfläche erforderlich, die zudem gegenüber der dortigen Oberschale einen verschmutzungsanfälligen Totraum bildet. Es entsteht zusätzliches Gewicht, was gerade bei Aufdach-Montage ungünstig ist.

Demgegenüber liegt der Erfindung die Aufgabe zugrunde, eine Aufdach-Klimaanlage gemäß dem Oberbegriff von Anspruch 1 zu schaffen, die kompakt baut, preisgünsig herzustellen und zu montieren ist und dennoch strömungstechnische Vorteile bietet.

Diese Aufgabe wird erfindungsgemäß durch Anspruch 1 gelöst. Vorteilhafte Weiterbildungen ergeben sich aus den Unteransprüchen.

Die erfindungsgemäße Lösung zieht in überraschend einfacher und stömungstechnisch besonders günstiger Weise die ohnehin erforderliche Trennwand zwischen dem Ausblaskanal des Verdampfergebläses und des Ansaugkanal des Verflüssigergebläses als gemeinsame Trennwand, praktisch in einer Art Doppelfunktion, heran, um strömungstechnische Vorteile zu erzielen. Durch eine Neigung, die in weiten Bereichen an die Erfordernisse anpassbar ist und beispielsweise 45° oder aber beispielsweise 30° oder Werte zwischen diesen Winkeln, aber auch beispielsweise 25° betragen kann, lässt sich eine besonders günstige Luftführung bei geringen Materialaufwand erzielen. Der erfindungsgemäße Ausblasraum kann sich besonders vorteilhaft über die gesamte Breite der Klimaanlage erstrecken, so dass er als Strömungsberuhigungszone zur Verfügung steht.

Erfindungsgemäß besonders günsig ist es, dass kein zusätzlicher Kanal gebaut werden muss, sondern dass der Ausblaskanal sich durch die Montage zwischen der erfindungsgemäßen Trennwand und dem Busdach von selbst ergibt.

Erfindungsgemäß bevorzugt ist es auch, dass durch die Anordnung von Verflüssiger, Verflüssigergebläse, Verdampfer und Verdampfergebläse hintereinander ein ausgesprochen kompakter Aufbau möglich ist. Es kann stets die gesamte Breite des Daches des Omnibusses oder zumindest die Breite der Klimaanlage ausgenutzt werden, also auch für die Gebläse. Hierdurch lässt sich die Gebläseleistung in eine Mehrzahl von Gebläsen aufteilen, die dementsprechend klein und flach bauen, so dass die Bauhöhe der Klimaanlage reduziert ist. Zudem ergibt sich die Möglichkeit, dass sowohl im Bereich des Verflüssigers als auch im Bereich des oder der Verdampfer eine ausgesprochen niedrige Strömungsgeschwindigkeit herscht, so dass ein je besonders guter Wärmetauscher-Wirkungsgrad vorliegt. Trotz dieser Vorteile ist eine kompakte Anordnung möglich und auch die Baulänge ist gegenüber der aus der vorstehend genannten Lösung der gleichen Patentinhaberin bekannten Konstruktion wesentlich, beispielsweise um 20%, kürzer.

In diesem Zusammenhang ist es besonders günstig, dass die Kompaktheit der Anordnung noch weiter verbessert werden kann, indem ein gewisser seitlicher Versatz zwischen Verdampfergebläse und Verflüssigergebläse ausgenutzt wird. So kann die Trennwand im Bereich jedes Axialgebläses etwas um dieses herum gezogen werden und daher in Richtung auf das Doppelradialgebläse vorspringen, während sie seitlich neben dem Axialgebläse, dem Verflüssigergebläse, wieder zurückspringen kann. Weder der Laminarität der Ausblasströmung der Verdampfergebläse noch der Strömungsberuhigung in dem Ausblasraum tut dieser Versatz Abbruch, wobei hierdurch noch einige Zentimeter an axialer Länge der Aufdach-Klimaanlage eingespart werden können.

Erfindungsgemäß ist es auch günstig, dass die Motoren der Verflüssigergebläse vergleichsweise eng von dem Luftstrom, der den Verflüssigerraum durchtritt, umspült werden. Hierdurch ist ihre Kühlung verbessert.

Während für die Durchströmung der Verflüssiger vergleichsweise große Strömungsquerschnitte günstig sind, und daher Lufteintrittsöffnungen für die Verflüssigergebläse über nahezu die gesamte Höhe und Breite der Klimaanlage-Vorderseite bevorzugt vorgesehen sind, sind Außenluft-Ansaugöffnungen für die Ansaugung von Frischluft bevorzugt klein und zudem seitlich versetzt angeordnet. Hierdurch lässt sich eine gewisse Vorabscheidung von Schmutz gewährleisten, wobei es sich versteht, dass in beliebiger geeigneter und an sich bekannter Weise zusätzlich Filter vorgesehen sein können.

Weitere Vorteile, Einzelheiten und Merkmale ergeben sich aus der nachstehenden Beschreibung zweier Ausführungsbeispiele der Erfindung anhand der Zeichnung.

Es zeigt:
- Fig. 1: einen Schnitt durch eine Ausführungsform einer erfindungsgemäßen Aufdach-Klimaanlage;
- Fig. 2: eine perspektivische und teilweise aufgebrochene Ansicht der Ausführungsform der Klimaanlage gemäß Fig. 1; und
- Fig. 3: eine perspektivische und teilweise aufgebrochene Ansicht einer weiteren Ausführungsform der Klimaanlage.

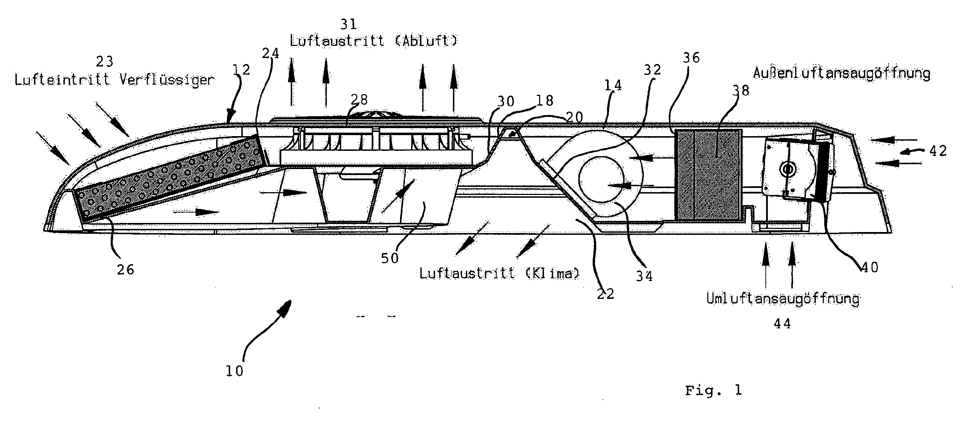

Aus Fig. 1 ist eine Aufdach-Klimaanlage 10 im Längsschnitt in einer Ausführungsform ersichtlich. Die Klimaanlage weist ein Gehäuse 12 mit einem Deckel 14 auf, der in an sich bekannter Weise die Klimaanlage 10 abdeckt und sich bis zu dem Dach 16 eines Fahrzeuges erstreckt.

Die Klimaanlage 10 weist ferner eine multifunktionale Unterschale 18 auf. Die Unterschale 18 ist auf dem Dach 16 gelagert und stützt auch den Deckel 14 innen ab. In dem dargestellten Ausführungsbeispiel erfolgt die Abstützung an einer zentralen Stelle 20 sogar unmittelbar. Dort ist es ein Ausblasraum 22 bis zum Deckel 14 gezogen, erstreckt sich also über gesamte Höhe des Gehäuses 12 der Klimaanlage 10.

Die Klimaanlage 10 weist an ihrem vorderen Ende einen Lufteinlass 23 für die den Verflüssigerraum durchtretende Luft auf. In dem Verflüssigerraum 24 ist ein Verflüssiger 26 schräg liegend angeordnet, und zwar dem Lufteinlass 23 benachbart. An das obere/hintere Ende des Verflüssigers 26 anschließend sind die Verflüssigergebläse 28 als Axialgebläse ausgebildet, wobei der Luftaustritt 31 nach oben erfolgt.

Anschließend an den Verflüssigerraum 24 ist der Ausblasraum 22 ausgebildet. Eine Trennwand 30 der Unterschale 18 trennt den Ausblasraum 21 von dem Verflüssigerraum 24. Die Trennwand 30 ist im Wesentlichen schrägstehend angeordnet und verläuft von vorne unten nach hinten oben, in einem Winkel von etwa 30° zur Vertikalen. In ihrem oberen Drittel ist eine Abkantung vorgesehen, in welcher der Schrägstellungwinkel etwa 60° trägt.

Es versteht sich, dass in weiteren Bereichen die genaue Ausgestaltung an die Erfordernisse anpassbar ist. Der Ausblasraum 22 ist in der Seitenansicht betrachtet im Wesentlichen symmetrisch, so dass die Form der Trennwand 30 derjenigen einer Gebläsewand 32 entspricht, die Verdampfergebläse 34 trägt. Die Verdampfergebläse 34 sind als Doppelradialgebläse ausgebildet und an der Gebläsewand 32 angeflanscht. Auch hier ist durch die Schrägstellung eine platzsparende Anordnung möglich.

Die Verdampfergebläse 34 sind in einem Verdampferraum 36 aufgenommen. Der Verdampferraum 36 nimmt darüberhinaus auch einen Verdampfer 38 auf, der in dem dargestellten Ausführungsbeispiel stehend angeordnet ist. Die Unterschale 18 weist dort eine Absenkung auf, die als Kondensatorwanne dient und über welche in Ansicht bekannter Weise etwaiges anfallendes Kondenswasser nach außen leitbar ist.

Der Verdampferraum 36 weist auch eine motorisch gesteuerte Außenluftklappe 40 auf, die hinter dem Verdampfer 38 angeordnet ist und mit welcher umschaltbar ist, ob die in dem Verdampferraum 36 eingesaugte Luft Umluft oder Außenluft ist. Hierzu ist eine Außenluftöffnung 42 an der Rückseite des Gehäuses 12 der Klimaanlage 10 ausgebildet. Ferner ist das Dach 16 des Fahrzeuges für die Bereitstellung einer Umluftansaugöffnung 44 durchbrochen.

Eine weitere, in geeigneter Weise ausgebildete Durchbrechung ist anschließend an den Ausblasraum 22 vorgesehen, um den Ausblaskanal für das Verdampfergebläse zu bilden.

Die Unterschale 18 trägt die hier beschriebenen Einheiten 26, 28, 34 und 38. Sie weist eine ausreichende Eigensteifigkeit auf, wenn sie auf dem Dach 16 montiert ist.

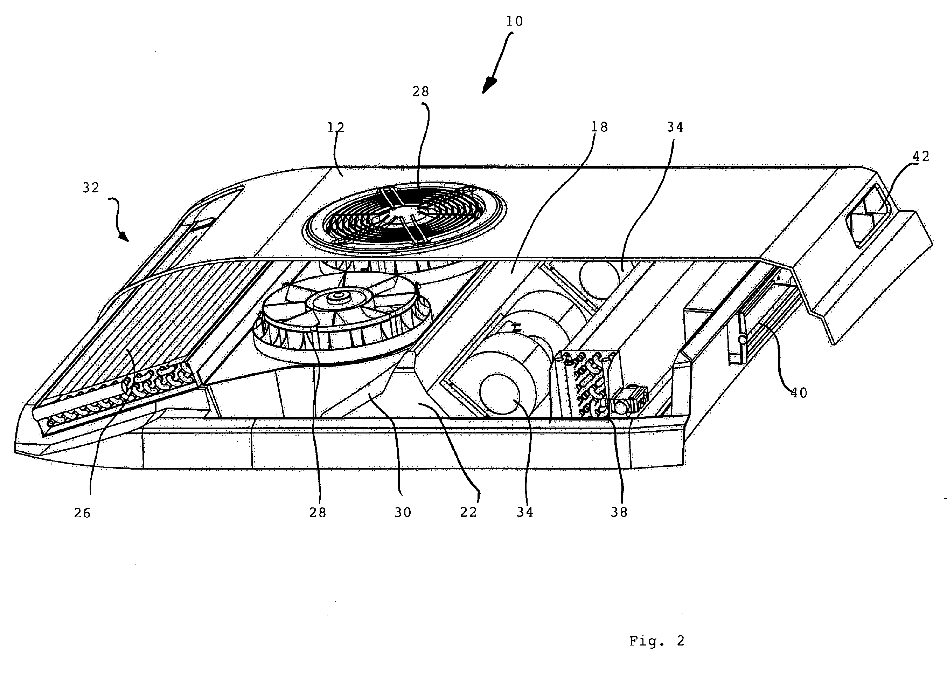

Aus Fig. 2 sind die Einzelheiten der erfindungsgemäßen Klimaanlage 10 besser ersichtlich. Hier weisen die gleichen Bezugszeichen auf gleiche Teile in Fig. 1 hin. Es ist ersichtlich, dass zwei Doppelradialgebläse als Verdampfergebläse 34 eingesetzt sind. Diese Gebläse 34 sind mit zwei Verflüssigergebläsen 28 kombiniert, wobei ein Verflüssigergebläse 28 etwa zentral vor dem je zugehörigen Verdampfergebläse 34 angeordnet ist. Bei Doppelradialgebläsen erfolgt der Luftaustritt bekanntlich je anschließend an die Evolventengehäuse, und hier erfolgt der Luftaustritt - in Fahrzeuglängsrichtung betrachtet -je seitlich des Axialgebläses 28. Insofern ist es unkrtisch, wenn je unterhalb jedes Axialgebläses 28 die Trennwand 30 nach hinten vorspringt, da die Luftströmung des Auslasskanals 22 seitlich dieses Vorsprungs 50 geleitet wird.

Aus Fig. 2 ist auch ersichtlich, dass die Luftansaugöffnung 42 gegenüber der Außenluftklappe seitlich versetzt ist. Die hierdurch erzwungene Luftumlenkung dient der Abscheidung von Staubpartikeln oder Wassertropfen, wobei es sich versteht, dass in beliebiger Weise auch ein Filter, beispielsweise im Bereich des Verdampfers 38, eingesetzt werden kann.

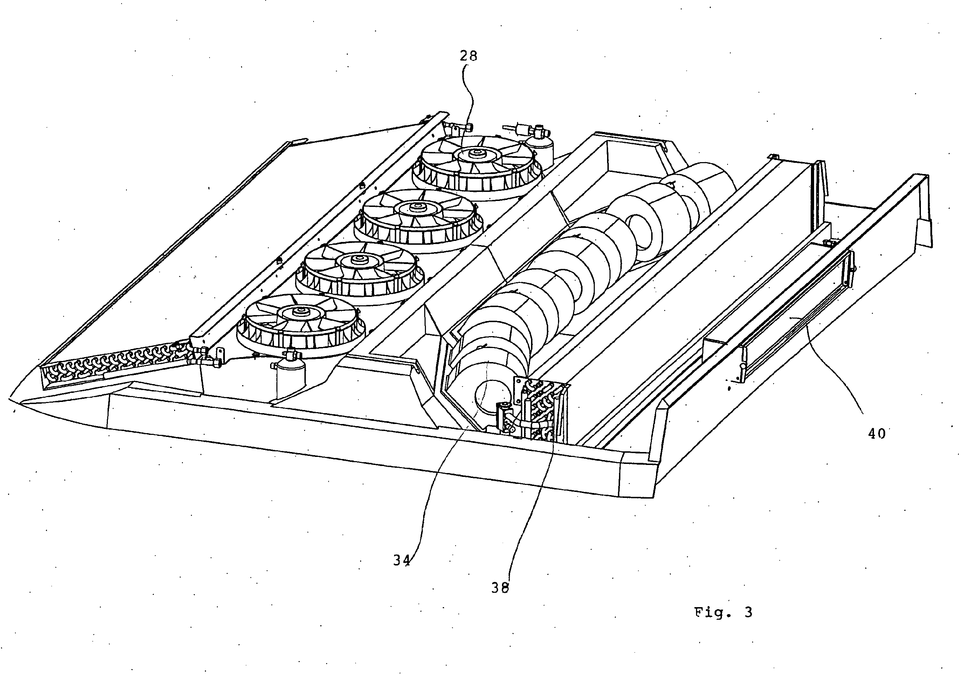

Fig. 3 zeigt eine Ausgestaltung einer erfindungsgemäßen Aufdach-Klimaanlage, die für eine höhere Leistung bestimmt ist. Anstelle von zwei sind vier Verdampfergebläse 34 vorgesehen, und ebenso vier Axialgebläse. Hierbei sind die beiden äußeren Doppelradialgebläse je - wie aus Fig. 3 ersichtlich - schräg nach außen, also schräg zu den Buslängsseiten, ausgerichtet. Diese Lösung hat den Vorteil, dass bei gleicher Breite der Anlage eine höhere Gebläseleistung bereitgestellt werden kann. Auch lässt sich hierdurch eine größere Luftmenge über einen breiteren Kanal in die Ausblaskanäle des Busses einleiten, so dass sich insofern weitere strömungstechnische Vorteile erzielen lassen.

## Patentansprüche

1. Aufdach-Klimaanlage, mit einem Verflüssigerraum, der mindestens einen Verflüssiger und mindestens ein Verflüssigergebläse aufnimmt, und mit einem Verdampferraum, der mindestens einen Verdampfer und mindestens einen Verdampfergebläse aufnimmt, wobei ein Gehäuse für deren Aufnahme auf dem Dach eines Fahrzeuges befestigbar ist, **dadurch gekennzeichnet, dass** das Gehäuse (12) eine Unterschale (18) aufweist, die das oder die Verdampfergebläse (32) trägt, und dass die Unterschale (18) eine Trennwand (30) zwischen Verdampferraum (36) und Verflüssigerraum (24) bildet.

2. Aufdach-Klimaanlage nach Anspruch 1, **dadurch gekennzeichnet, dass** ein Ausblaskanal des Verdampfergebläses (34) zwischen der Unterschale (18) und dem Dach (16) des Fahrzeuges gebildet ist.

3. Aufdach-Klimaanlage nach Anspruch 1, **dadurch gekennzeichnet, dass** der Ausblaskanal für das Verdampfergebläse (34) sich im Wesentlichen über die gesamte Breite der Aufdach-Klimaanlage (10) erstreckt und dass mehrere im Wesentlichen gleichmäßig voneinander beabstandete Gebläse parallel geschaltet sind, insbesondere mindestens zwei Doppelradialgebläse.

4. Aufdach-Klimaanlage nach einem der vorhergehenden Ansprüche, **dadurch gekennzeichnet, dass** ein Ausblaskanal, der zwischen Unterschale (18) und Dach (16) des Fahrzeugs gebildet ist, sich im Wesentlichen über die gesamte Höhe des Gehäuses (12) erstreckt und als großvolumige Strömungsberuhigungszone ausgebildet.

5. Aufdach-Klimaanlage nach einem der vorhergehenden Ansprüche, **dadurch gekennzeichnet, dass** der Verflüssiger (26) und das Verflüssigergebläse (28) auf der Unterschale (18) abgestützt sind und die Unterschale (18) ohne zusätzliche Luftleitbleche die Luftströmung durch den Verflüssigerraum (24) hindurch leitet.

6. Aufdach-Klimaanlage nach einem der vorhergehenden Ansprüche, **dadurch gekennzeichnet, dass** in die Unterschale (18) eine Kondensatwasserwanne eingeformt ist, in der die oder der Verdampfer (38) stehen.

7. Aufdach-Klimaanlage nach einem der vorhergehenden Ansprüche, **dadurch gekennzeichnet, dass** die Unterschale (18) als tragendes Bauteil sämtliche Einheiten der Aufdach-Klimaanlage (10) aufnimmt und lagert und dass die Aufdach-Klimaanlage (10) zur Bildung des Gehäuses (12) von einer nicht-tragenden Haube abgedeckt ist.

8. Aufdach-Klimaanlage nach einem der vorhergehenden Ansprüche, **dadurch gekennzeichnet, dass** die Unterschale (18) als Kunststoffteil, insbesondere aus GFK oder Spritzguß, oder als Blechformteil aus einem korrosionsbeständigen Material ausgebildet ist.

9. Aufdach-Klimaanlage nach einem der vorhergehenden Ansprüche, **dadurch gekennzeichnet, dass** die Unterschale (18) Ausnehmungen aufweist, in welche die Einheiten wahlweise mit gemeinsam nach rechts oder gemeinsam nach links weisenden Anschlüssen aufnehmbar sind.

10. Aufdach-Klimaanlage nach einem der vorhergehenden Ansprüche, **dadurch gekennzeichnet, dass** der oder die Verflüssiger liegend, also in einem Schrägstellungswinkel von weniger als 45°, in dem Gehäuse (12) der Aufdach-Klimaanlage (10) aufgenommen ist.

11. Aufdach-Klimaanlage nach einem der vorhergehenden Ansprüche, **dadurch gekennzeichnet, dass** in Fahrtrichtung hinter dem Verdampfer (38) ein Schieber oder eine Klappe (40) angeordnet ist, über welchem zwischen Außenansaugung und Umluftansaugung umschaltbar ist.

12. Aufdach-Klimaanlage nach Anspruch 11, **dadurch gekennzeichnet, dass** die Außenluftklappe (40) motorisch betätigbar ist.

13. Aufdach-Klimaanlage nach einem der vorhergehenden Ansprüche, **dadurch gekennzeichnet, dass** ein Dachausschnitt stromab des Ausblasraums (22) des Verdampfergebläses (34) nach dem erforderlichen Strömungsquerschnitt bemessen ist und der Ausblasraum (22) einen um einen mehrfach größeren Strömungsquerschnitt als der Dachausschnitt aufweist.

14. Aufdach-Klimaanlage nach einem der vorhergehenden Ansprüche, **dadurch gekennzeichnet, dass** mehrere Verdampfergebläse (34) quer über den Bus nebeneinander angeordnet sind, wobei insbesondere die je äußeren Verdampfergebläse hinsichtlich ihrer Achsen schräg zu den inneren Verdampfergebläsen angeordnet sind.
